# EUROPEAN PATENT APPLICATION

(11) **EP 4 481 224 A1**
(43) Date of publication of application: **25.12.2024**
(21) Application number: 24164182.8
(22) Date of filing: 18.03.2024
(51) Int. Cl.: F16D 65/097, F16D 65/02

(54) **RETRACTION SPRING, BRAKE CALIPER AND VEHICLE BRAKE**

(30) Priority: 22.06.2023 KR 20230080542
(71) Applicant: HL Mando Corporation, Pyeongtaek-si, Gyeonggi-do 17962 (KR)
(72) Inventor: AHN, Dongkyun, 06517 Seoul (KR)
(74) Representative: BCKIP Part mbB

(57) **Abstract**

A retraction spring includes a pad coupling part including a first arm and a second arm contacting a front surface and a rear surface of a protruding portion of a brake pad, respectively, and a connecting portion connecting between the first arm and the second arm, a body part extending from the pad coupling part and configured to provide an elastic restoring force, and a carrier support part extending from the body part and supported by a coupling hook formed on a carrier. The first arm is bent at or from one side of the connecting portion toward the front surface, the second arm is bent at or from the other side of the connecting portion toward the rear surface, and the body part is bent from the other side of the connecting portion.

## Description

### TECHNICAL FIELD OF THE INVENTION

The present invention generally relates to a retraction spring and a brake caliper including the same, and more specifically, to a retraction spring capable of preventing a drag phenomenon when braking is released, and a brake caliper including the same. The invention further relates to a vehicle brake.

### BACKGROUND

Vehicles typically include a brake system for performing braking, and various types of brake systems have been developed for the safety of passengers and freights.

One example of a brake systems is a caliper brake. The caliper brake may be a brake system for generating a braking force by friction or clamping pressure between a brake disk rotating with a wheel and brake pads. The brake pads are installed at opposite sides of the brake disk in a brake caliper and pressed toward the brake disk. The brake caliper may include a caliper housing that covers the brake pads. The brake pad is guided in the brake caliper, e.g., in a carrier of the brake caliper or in the caliper housing, to move forward toward and backward from the brake disk. The caliper housing may comprise a cylinder in which a piston is guided, wherein the piston is configured to move at least one of the brake pads towards and away from the brake disk, e.g., by help of hydraulic pressure. The brake pads, thus, are pressed toward the brake disk by applying an external force to the piston, e.g., by means of a hydraulic pressure or by power of an electric motor.

The brake pad is moved into contact with the brake disk to generate a frictional force that brakes the disk, or releases braking by being spaced apart or moving away from the brake disk. Typically, the brake pad is elastically supported by a pad spring. In addition, the brake caliper may include retraction means configured to return the brake pad to an original position or a brake release position, in which the brake pad is spaced apart from the brake disk, when the braking is released. The retraction means is installed to provide an elastic restoring force to the brake pad or a pad plate.

The retraction means helps to improve the performance and operational reliability of the brake caliper because it can prevent a drag phenomenon in which the brake disk is in continuous contact with the brake pad even when the external force pressing the brake pad towards the disk is released.

### SUMMARY OF THE INVENTION

It is one of the objects of the present invention to find improved solutions for retracting a brake pad from a brake disk.

In particular, it is one object of the present invention to provide a retraction spring provided in a separated manner to easily perform a change in structure thereof and a brake caliper including the same.

It is another object of the present invention to provide a retraction spring with improved restoring force, and a brake caliper including the same.

It is still another object of the present invention to provide a retraction spring of which material waste can be minimized during the manufacturing of the retraction spring, and a brake caliper including the same.

It is yet another object of the present invention to provide a retraction spring for easy assembly and maintenance, and a brake caliper including the same.

It is yet another object of the present invention to provide a retraction spring with improved operational performance and reliability, and a brake caliper including the same.

Additional objects and purposes of the invention will be set forth in part in the description which follows and, in part, will be obvious from the description, or may be learned by practice of the invention.

To this end, the present invention provides a retraction spring in accordance with claim 1, and a brake caliper in accordance with claim 13, and a brake for a vehicle in accordance with claim 14. Advantageous embodiments are subject to the dependent claims and the following description, referring to the drawings.

In accordance with a first aspect of the present invention, a retraction spring coupled to protruding portions formed on both sides of a pad plate of a brake pad and configured to return the brake pad in an axial direction when braking is released is provided. The retraction spring includes a pad coupling part including a first arm and a second arm that come into contact with a front surface and a rear surface of the protruding portion, respectively, and a connecting portion provided between the first arm and the second arm, a body part extending from the pad coupling part and configured to provide an elastic restoring force, and a carrier support part extending from the body part and supported by a coupling hook formed on a carrier, wherein the first arm is bent at a first end of the connecting portion and extends toward the front surface, the second arm is bent at the second end of the connecting portion and extends toward the rear surface, and the body part is provided to extend and be bent from the other side of the connecting portion.

The connecting portion may be provided to face or contact a side surface of the protruding portion.

The connecting portion may be provided to face or contact a lower surface of the protruding portion.

The body part may be formed by being bent, in a first section, toward a center from the pad coupling part and bent outward in a second section.

The body part, in a third section, may be bent axially and connected to the carrier support part.

The body part may be formed by being bent upward from the pad coupling part, in a first section, and bent downward in a second section.

The body part may be bent, in a third section, axially and connected to the carrier support part.

The first arm may include a first inclined portion bent at the first end of the connecting portion and having an inclination approaching the second arm, and a second inclined portion bent from the first inclined portion and having an inclination away from the second arm.

The second arm may include a third inclined portion bent at the second end of the connecting portion and having an inclination approaching the first arm, and a fourth inclined portion bent from the third inclined portion and having an inclination away from the first arm.

A minimum distance between the first arm and the second arm may be provided smaller than a thickness of the protruding portion.

The body part may include at least one opening formed to pass therethrough.

The carrier support part may include a first leg extending from the body part and bent in one direction, and a second leg extending from the body part and bent in the other, opposite direction.

The carrier support part may include a first leg extending from the body part and at least partially cut and bent in one direction, and a second leg extending from the body part and bent in the other, opposite direction.

The carrier support part may include at least one bent portion extending from and bent on the body part.

According to a second aspect of the invention, a brake caliper includes a pair of brake pads provided to press both side surfaces of a disk rotating together with a wheel, a carrier including slide grooves into which protruding portions formed at both sides of the pad plate of each of the brake pads are fitted, and coupling hooks formed around the slide grooves, and a retraction spring according to the first aspect of the invention coupled to the protruding portion and configured to return the brake pad in an axial direction when braking is released, wherein the first arm and the second arm of the pad coupling part of the return spring come into contact with a front surface and a rear surface of the protruding portion, respectively, and the connecting portion provided between the first arm and the second arm faces a side surface or a lower surface of the protruding portion. The first arm is bent at the first end of the connecting portion and extends toward the front surface, and at least a portion of the second arm is bent at the second end of the connecting portion and extends toward the rear surface. The body part of the return spring extends from the pad coupling part and is configured to provide an elastic restoring force. The carrier support part of the return spring extends from the body part and is supported by the coupling hook. The body part is provided to extend and be bent from the second end of the connecting portion.

The brake pads each may include a pad plate and a frictional pad for contacting the brake disk, the frictional pad being disposed on the pad plate.

The body part may include a first curved portion bent toward a portion corresponding to a center from the pad coupling part, a first flat portion extending from the first curved portion, a second curved portion bent in a direction corresponding to an outward direction from the first flat portion, and a second flat portion extending from the second curved portion.

The body part may further include a third curved portion bent in a direction corresponding to an axial direction from the second flat portion, and a third flat portion extending from the third curved portion and connected to the carrier support part.

The body part may include a first curved portion bent in a direction corresponding to an upward direction from the pad coupling part, a first flat portion extending from the first curved portion, a second curved portion bent in a direction corresponding to a downward direction from the first flat portion, and a second flat portion extending from the second curved portion.

The body part may further include a third curved portion bent in a direction corresponding to an axial direction from the second flat portion, and a third flat portion extending from the third curved portion and connected to the carrier support part.

The carrier may be provided so that a distance from the disk to the coupling hook onto which a protruding portion of an inner brake pad is fitted differs from a distance from the disk to the coupling hook onto which a protruding portion of an outer brake pad is fitted.

According to a third aspect of the invention, a brake for a vehicle is provided. The brake includes a brake disk rotatable about a rotational axis which extends parallel to the axial direction, and the brake caliper according to the second aspect of the invention. The brake pads are positioned on opposite sides of the brake disk to be movable into contact with opposite side surfaces of the brake disk.

The carrier may be positioned in the axial direction relative to the brake disk such that a distance from the brake disk to the coupling hooks on which the retraction springs coupled to the protruded portions of one of the pair of brake pads are supported is different from a distance from the brake disk to the coupling hooks on which the retraction springs coupled to the protruded portions of the other one of the pair of brake pads are disposed.

### BRIEF DESCRIPTION OF THE DRAWINGS

The features and advantages of the invention will become apparent and more readily appreciated from the following description of the embodiments, taken in conjunction with the accompanying drawings of which:
FIG. 1 is a perspective view schematically illustrating a brake caliper according to a first embodiment of the present invention;
FIG. 2 is a front view schematically illustrating the brake caliper according to the first embodiment of the present invention;
FIG. 3 is a perspective view schematically illustrating a retraction spring according to the first embodiment of the present invention;
FIG. 4 is a cross-sectional view illustrating the brake caliper equipped with the retraction spring according to the first embodiment of the present invention;
FIG. 5 is a plan view schematically illustrating the brake caliper according to the first embodiment of the present invention;
FIG. 6 is a front view schematically illustrating a brake caliper according to a second embodiment of the present invention;
FIG. 7 is a perspective view schematically illustrating a retraction spring according to the second embodiment of the present invention;
FIG. 8 is a plan view schematically illustrating the retraction spring according to the second embodiment of the present invention;
FIG. 9 is a perspective view schematically illustrating a retraction spring according to a third embodiment of the present invention;
FIG. 10 is a plan view schematically illustrating the retraction spring according to the third embodiment of the present invention;
FIG. 11 is a perspective view schematically illustrating a retraction spring according to a fourth embodiment of the present invention;
FIG. 12 is a plan view schematically illustrating the retraction spring according to the fourth embodiment of the present invention;
FIG. 13 is a perspective view schematically illustrating a retraction spring according to a fifth embodiment of the present invention;
FIG. 14 is a plan view schematically illustrating the retraction spring according to the fifth embodiment of the present invention;
FIG. 15 is a perspective view schematically illustrating a retraction spring according to a sixth embodiment of the present invention; and
FIG. 16 is a plan view schematically illustrating the retraction spring according to the sixth embodiment of the present invention.

### DETAILED DESCRIPTION OF EXEMPLARY EMBODIMENTS

Hereinafter, exemplary embodiments of the present invention will be described in detail with reference to the accompanying drawings. The following embodiments are presented to sufficiently convey the present invention to those skilled in the art to which the present invention pertains. The present invention may also be specified in other forms without being limited to only the exemplary embodiments presented herein. In the drawings, in order to clarify the present invention, illustration of parts irrelevant to the description may be omitted, and the sizes of components may be slightly exaggerated to help understanding.

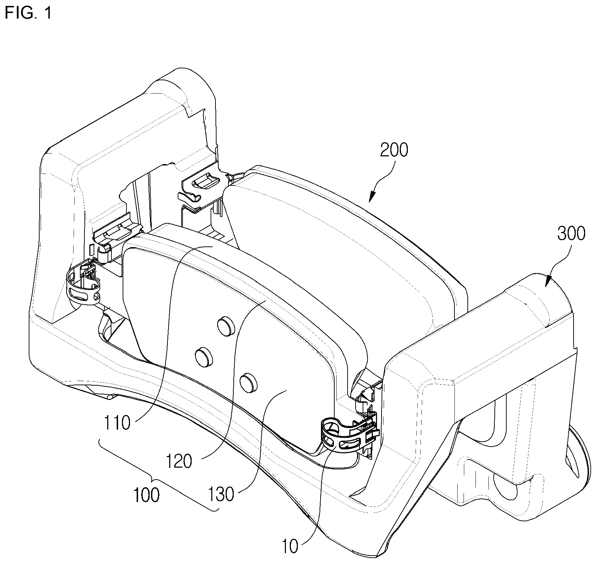

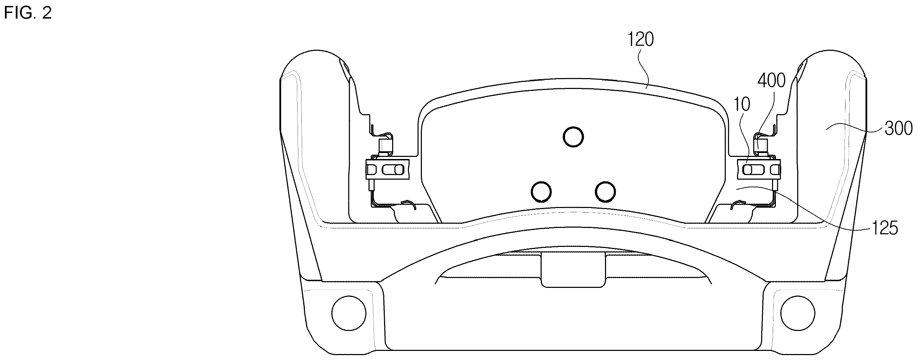

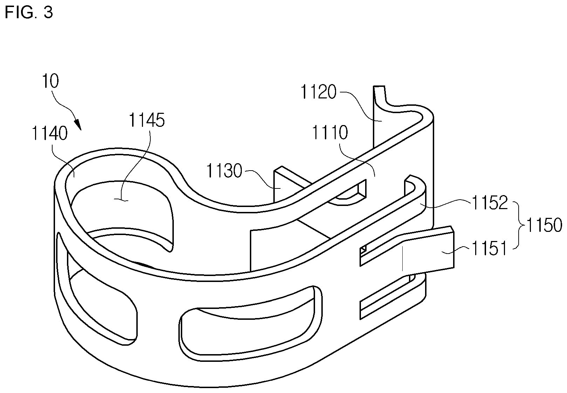

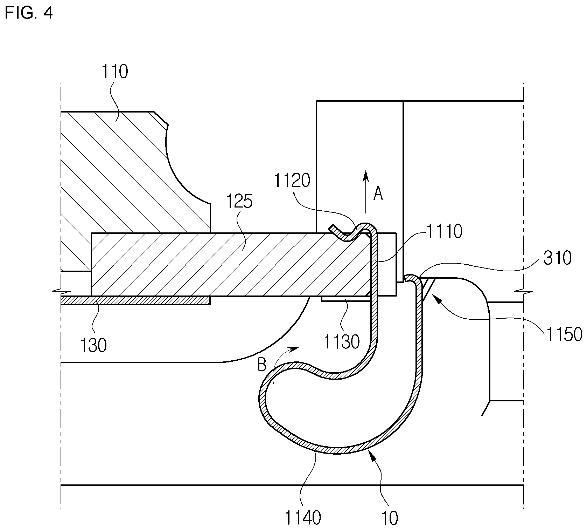

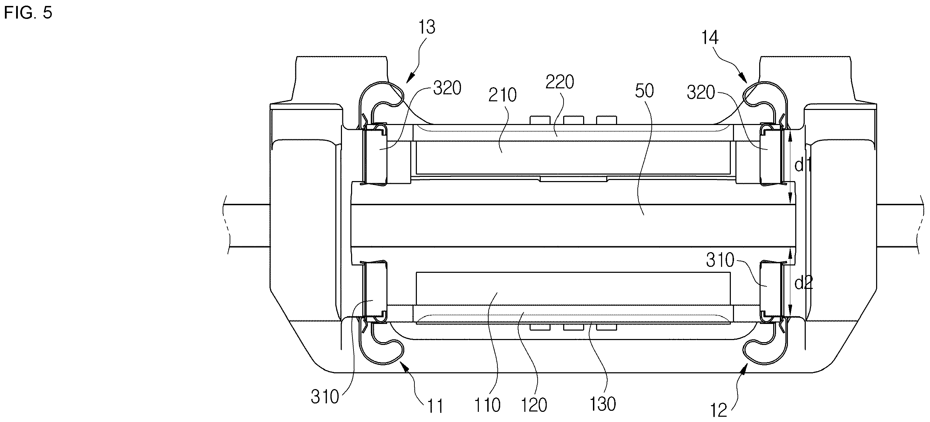

FIG. 1 is a perspective view schematically illustrating a brake for a vehicle comprising a brake caliper according to a first embodiment of the present invention, and FIG. 2 is a front view schematically illustrating a brake caliper according to the first embodiment of the present invention. In addition, FIG. 3 is a perspective view schematically illustrating a retraction spring according to the first embodiment of the present invention, and FIGS. 4 and 5 are a partial cross-sectional view and a plan view illustrating a brake caliper equipped with the retraction spring according to the first embodiment of the present invention, respectively.

Referring to FIGS. 1 to 5, the brake caliper may include a pair of brake pads 100 and 200, a carrier 300, and a retraction spring 10. The brake caliper may further include a caliper housing.

The brake pads 100 and 200 may include pad plates 120 and 220 to which frictional pads 110 and 210 are attached. The friction pads 110, 210 are provided to be pressed against both side surfaces of a disk 50 rotating with a wheel to generate a frictional force braking the disk 50. Further, the friction pads 110, 210 may comprise protruding portions 125 formed at opposite lateral sides of the pad plates 120 and 220 of each of the brake pads 100 and 200, respectively.

The carrier 300 may include slide grooves into which the protruding portions 125 protrude. The protruding portions 125 are movably or slidably fitted or inserted so that the pair of brake pads 100 and 200 can move forward, i.e., towards the disk 50, and backward, i.e., away from the disk 50. The slide grooves may extend in an axial direction which may be parallel to an axis of rotation of the disk 50. Coupling hooks 310, 320 may be formed neighboring to the slide grooves.

The caliper housing may be slidably mounted on the carrier 300 and may operate the pair of pad plates 120 and 220 by applying an external force to the pad plates 120, 220 to move the brake pads 100, 200 in the axial direction.

The retraction spring 10 is coupled to a respective one of the protruding portions 125 of the pair of brake pads 100, 200 and is configured to return the brake pads 100 and 200 to their original position or brake release position in the axial direction when the braking is released. In the original position or brake release position, the brake pads 100, 200 are spaced apart from the brake disk 50 in the axial direction. That is, the frictional pad 110, 210 of the respective brake pad 100, 200 does not contact the disk 50 in the original position or brake release position.

The frictional pads 110 and 210 that cause friction against the disk 50 are respectively attached to inner surfaces of the pair of brake pads 100 and 200, and the protruding portions 125 are formed on both end portions or lateral side portions of each of the pad plates 120 and 220. The pair of brake pads 100, 200 may include an outer brake pad 100 disposed in contact with or in association with a finger portion of the brake caliper, and an inner brake pad 200 disposed in contact with or in association with a piston. Shims 130 may be provided on outer surfaces of the brake pads 100 and 200, e.g., on a surface of the pad plate 120, 220 facing away from the respective frictional pad 110, 210..

The carrier 300 is fixedly coupled to a fixture of a vehicle such as a knuckle of a vehicle body to be positioned adjacent to an outer circumference of the disk 50. Hence, the carrier 300 may remain stationary relative to the disk 50 with respect to the axial direction. The slide grooves may be formed in inner side portions of the carrier 300 that are positioned opposite to each other in a circumferential direction extending transverse to the axial direction. The slide grooves, with respect to a radial direction extending transverse to the circumferential direction and to the axial direction, may be located at positions, respectively, to be able to guide to the protruding portions 125 formed on both side surfaces of the pad plates 120 and 220 of the pair of brake pads 100 and 200 at a predefined position so that the brake pads 100, 200 may contact the disk 50 at a desired radial position.

The coupling hooks 310, 320 may be formed around the slide grooves. A pair of coupling hooks 310 may be formed on both inner side portions of the carrier 300, and therefore the carrier 300 may have a total of four coupling hooks 310. Generally, a respective coupling hook 310, 320 may limit or define a respective slide groove with respect to the radial direction. Further, the coupling hook 310, 320 may also include or form a part of a sidewall that limits the slide groove 310, 320 in the circumferential direction. In the broadest sense, the coupling hook 310, 320, therefore, may be understood as a structure positioned adjacent or neighboring to the slide groove and being configured to provide a support for supporting a part of the return spring, as will be explained in more detail below.

The slide grooves, with respect to the circumferential direction, may be each formed at the front and rear of the carrier 300 so that the pair of brake pads 100 and 200 are each installed therein. As exemplarily shown in FIGS. 1 and 5, for example, the carrier 300 may comprise a first or outer carrier part and a second or inner carrier part spaced to the first carrier part in the axial direction and connected thereto through a bridge part. The first and second carrier parts, with respect to the axial direction, define a passage through which the disk 50 may rotate. A slide grooves may extend on both sides of the passage. For example, slide grooves may be arranged opposite to each other in the axial direction and may extend coaxially on both sides of the passage. The protruding portions 125 of the brake pads 100, 200 are movably guided in the slide grooves. Hence, the brake pads 100, 200 are movable forward or towards the passage and backwards or away from the passage. In other words, as illustrated in FIGS. 1 and 2, the slide grooves formed in or at both side portions of the carrier 300 are formed to be spaced a certain interval apart or from each other, and the slide groove has an open central portion, namely the passage, so that the disk 50 is rotatably positioned by being smoothly inserted therein. In addition, an outer beam and a main beam are formed under the slide grooves at the front and rear of the carrier 300, respectively, to withstand a torque generated during a braking operation.

The protruding portions 125 are coupled by being movably or slidably fitted or inserted into the slide grooves of the carrier 300 so that the pair of brake pads 100 and 200 can slide along the slide grooves of the carrier 300. Thus, when the brake pads 100 and 200 move forward along the slide groove of the carrier 300, the frictional pads 110 and 210 are moved in close contact with opposite side surfaces of the disk 50 to generate a braking force, and when the brake pads 100 and 200 move backward along the slide groove of the carrier 300, the brake pads 100, 200 are moved away from the disk 50 to release the braking force.

The carrier 300 may include guide holes that are formed to be parallel to the slide grooves in or at both upper side portions of the carrier 300. The caliper housing may be slidably installed in the carrier 300. For example, guide rods may be installed on both ends of the caliper housing and may be inserted into guide holes provided in or at both ends of the carrier 300, and the caliper housing may be guided by the guide rods to be movable in the axial direction. The caliper housing may include a cylinder or bore in or on which a piston is installed, and a finger portion placed opposite to the bore. The piston is movably guided in the bore and configured to move the inner brake pad 200 along the axial direction towards the brake disk 50. When the inner brake pad 200 is moved into contact with the brake disk 50 by the piston, a reaction force is generated that axially moves the caliper housing. Thereby, the finger portion moves the outer brake pad 100 into contact with the brake disk 50. Thus, the brake caliper may be realized as a floating caliper.

A pad spring 400 may be coupled to the slide groove of the carrier 300. The pad spring 400 may elastically support the slide movement of the protruding portion 125 of the pad plate 120, 220 along the slide groove. The pad spring 400 may, for example, couple the pad protruding portion 125 to the groove. The retraction spring 10 may be installed together with the pad spring 400.

The retraction spring 10 is coupled to the protruding portions 125 of the pair of brake pads 100 and 200 and is configured to return the brake pads 100 and 200 in the axial direction when an external force pressing the brake pads 100, 200 against the disk 50 for braking is released. For example, in total, four retraction springs 10 may be provided, wherein one retraction spring 10 is arranged with each of the protruding portions 125 formed at both sides of the pad plates 120 and 220 of the pair of brake pads 100 and 200 to return the brake pads 110 and 210 to their original positions or brake release positions in the axial direction when the braking is released. The invention, however, is not limited in that regard, and it may be sufficient to provide only one return spring 10 per brake pad 100, 200.

Referring to FIG. 3, the retraction spring 10 according to the first embodiment of the present invention may include a pad coupling part, a body part 1140, and a carrier support part 1150.

The pad coupling part may include a first arm 1120 for contacting or for being coupled with a front surface of the protruding portion 125, a second arm 1130 for contacting or for being coupled with a rear surface of the protruding portion 125 of the brake pad 100, 200, and a connecting portion 1110 facing or contacting a side surface of the protruding portion 125 of the brake pad 100, 200. The connecting portion 1110 connects the first arm 1120 and the second arm 1130. The front surface of the protruding portion 125 faces the passage of the carrier, the rear surface of the protruding portion 125 is oriented opposite.

The body part 1140 may extend from the pad coupling part and may be configured to provide an elastic restoring force.

The carrier support part 1150 may extend from the body part 1140 and may be supported by the coupling hook 310 when installed on the carrier 300.

Referring to FIGS. 3 and 4, the first arm 1120 of the retraction spring 10 may be bent at or from one side or end of the connecting portion 1110 and extends toward the protruding portion 125 or the brake pad 100, 200, and at least a portion of the second arm 1130 may be cut and bent at or from the other side or end of the connecting portion 1110 and extends toward the protruding portion 125 or the brake pad 100, 200. Generally, the first arm 1120 and the second arm 1130 each may extend transverse or substantially perpendicular to the connecting portion 1110 that connects the first and second arms 1120, 1130. The first and second arms 1120, 1130 may be arranged spaced to each other such that a receiving gap for receiving the protruding portion therein is formed between first and second arms 1120, 1130. For example, the first arm 1120 may be positioned on a first end of the connecting portion 1110, and the second arm 1130 may be positioned at a second end of the connecting portion 1110.

In a state in which the protruding portion 125 is received in the receiving gap, the first and second arms 1120, 1140 may extend in a direction substantially parallel to the protruding portion 125 or the brake pad 100, 200.

In other words, the first arm 1120 and the second arm 1130 may each be bent in an arc shape from the opposite ends of the connecting portion 1110 to extend toward the protruding portion 125. Referring to FIG. 4, the first arm 1120 of the retraction spring 10 may be in contact with or coupled to a front surface of the protruding portion 125, that is, an inner surface of the protruding portion 125 facing the disk 50, the second arm 1130 of the retraction spring 10 may be in contact with or coupled to a rear surface of the protruding portion 125, that is, an outer surface of the protruding portion 125 facing away from the disk 50, and the connecting portion 1110 may face or contact a side surface of the protruding portion 125. The connecting portion 1110 connects the first arm 1120 and the second arm 1130. The first arm 1120 may be formed to be bent at or from a first side or end of the connecting portion 1110 and, when the return spring 10 is coupled to the brake pad 100, 200, may extend toward the front surface of the protruding portion 125 to support or face the front surface of the protruding portion 125. The second arm 1130 may be formed by cutting and bending a portion of the connecting portion 1110 and, when the return spring 10 is coupled to the brake pad 100, 200, may extend toward the rear surface of the protruding portion 125 to support or face the rear surface of the protruding portion 125.

As shown, for example in FIGS. 3 and 4, the body part 1140 is connected to and formed to extend from the connecting portion 1110. In particular, the body portion 1140 may be connected to a second end of the connecting portion 1110, from which the second arm 1130 protrudes or extends.

Referring to FIGS. 3 and 4, the first arm 1120 may have a curved shape. For example, the first arm may extend substantially U-shaped. In detail, the first arm may include a first inclined portion bent at or from one side or one end of the connecting portion 1110 toward the second arm 1130 and having an inclination approaching the second arm 1130, and a second inclined portion bent away from the second arm 1130 and having an inclination away from the second arm 1130. In other words, the first arm 1120 may have a shape in which a connecting portion of the first inclined portion and the second inclined portion of the first arm 1120 protrudes toward the second arm 1130. That is, the curved shape of the first arm 1120 may be such that a minimum distance between the first arm 1120 and the second arm 1130 in a state, in which the retraction spring 10 is not coupled to the protruding portion 125 of the brake pad 100, 200, may be narrower or smaller than a thickness of the protruding portion 125. Thus, when the protruding portion 125 is inserted between the first arm 1120 and the second arm 1130, the first inclined portion and the second inclined portion of the first arm 1120 are elastically deformed. Consequently, the protruding portion 125 may be stably or firmly placed or coupled between the first arm 1120 and the second arm 1130 by their elastic restoring force.

The body part 1140 may be connected to and formed to extend from the second side or end of the connecting portion 1110.

The body part 1140 may be bent to have a substantially continuously curved shape, wherein a first end of the body part 1140 is connected to and extends from the pad coupling part, and a second end of the body part 1140 is connected to and extends to the carrier support part 1150. The body part 1140 is configured to return the brake pads 100 and 200 when the external force applied to the brake pads 100, 200 during braking is released, by generating elastic restoring forces when the brake pads 100 and 200 slide along the slide grooves of the carrier 300 in a state in which the carrier support parts 1150 are supported by the coupling hooks formed around the slide grooves of the carrier 300 and the pad coupling parts are coupled to the protruding portions 125 of the brake pads 100 and 200. For example, referring to FIG. 4, when the brake pad 100 slides in a direction A during the braking, the body part 1140 is elastically deformed in a direction B, and when the braking is released, the brake pad 100 is returned to its original position by the elastic restoring force of the body part 1140. The body part 1140, thus, generally, is configured to be elastically deformable to generate a restoring force.

The body part 1140 may have a bent or curved shape to provide an appropriate elastic restoring force to the brake pad 100.

As exemplarily shown in FIG. 3, the body part 1140 may be primarily bent toward a center (e.g. a center of the brake pad 100) or a portion corresponding to the center from the pad coupling part, secondarily bent outward (e.g. in a direction of being away from the center of the brake pad 100) or in a direction corresponding to the outward direction, and tertiarily bent in an axial direction (e.g. in a direction perpendicular to the brake pad 100) or a direction corresponding to the axial direction to be connected and extend to the carrier support part 1150. In addition, at least a portion of the body part 1140 may be formed to extend flat between the bent portions. In other words, the body part 1140 may comprise a first section connected to the second end of the connecting portion 1110 of the pad coupling part and extending in an arc shape from the connecting portion 1110 on a first lateral side of the connecting portion 1110 on which the first and second arms 1120, 1130 extend, a second section connected to the first section and extending in an arc shape of opposite curvature than the first section from the first lateral side of the connecting portion 1110 to a second lateral side of the connecting portion 1110, and a third portion that is connected to the second portion and extends linear or substantially linear from the second portion towards the pad coupling part.

As visible, for example, in FIG. 3, the body part 1140 may comprise one or more openings 1145 formed to pass therethrough. The opening 1145 may be formed to pass through the bent band-shaped body part 1140, and a magnitude or strength of the elastic restoring force which can be generated by the body part 1140 may be adjusted by varying the number and sizes of the openings 1145. Optionally, a plurality of openings 1145 may be provided, and the plurality of openings 1145 may be disposed to be spaced a certain distance apart or from each other along the body part 1140.

When the return spring 10 is coupled to the carrier 300, the carrier support part 1150 is supported by the coupling hook 310, 320 formed on the carrier 300. The carrier support part 1150 may include a first leg 1151 extending from the body part 1140 and being bent in a first direction away from the connecting portion 1110 of the pad coupling part, and a second leg 1152 extending from the body part 1140 and being bent in a second direction towards the connecting portion 1110 of the pad coupling part, as exemplarily shown in FIG. 3. As further illustrated in FIG. 3, at least a portion of the first leg 1151 of the carrier support part 1150 may be provided by cutting a portion of the carrier support part 1150 and bending the cut portion in the first direction, and the second leg 1152 of the carrier support part 1150 may be provided by bending another portion of the carrier support part 1150 in the opposite second direction.

As exemplarily shown in FIG. 3, the carrier support part 1150 comprises a substantially plate shaped form extending from the body part 1140. The first leg 1151 may be separated from the second leg 1152 by a cut out formed in the carrier support part 1150 and extending longitudinally from an end of the support part 1150. For example, two first legs 1151 may be provided at opposite lateral ends of the carrier support part 1150, and one second leg 1152 may be provided between the first legs 1151, wherein the second leg 1152 is separated from the first legs 1151 by a cut out, respectively. Thus, generally, the first and second legs 1151, 1152 may extend from the body part 1140 and have a shape of being at least partially cut.

As described above, by manufacturing the first leg 1151 and the second leg 1152 by cutting between the first leg 1151 and the second leg 1152 and bending the first leg 1151 and the second leg 1152 in different directions, material waste may be reduced and the stable support of the retraction spring 10 on the carrier 300 may be achieved.

As described above, the pad coupling part, the body part 1140, and the carrier support part 1150 of the retraction spring may be formed by cutting a band shaped sheet and/or bending the cut portions to form, for example, the second arm 1130 and the first and second legs 1151, 1152, material waste may be reduced during the manufacturing of the retraction spring 10 and a process of manufacturing the retraction spring 10 may be simplified.

The brake caliper according to the first embodiment of the present invention may differently set or adjust restoring forces applied to the inner brake pad 200 and the outer brake pad 100 without changing the retraction spring 10. The inner brake pad 200 may be directly or indirectly pressed by the piston, and the outer brake pad 100 is pressed according to an operation of the finger portion of the caliper housing by a reaction force. Therefore, different restoring forces for returning the brake pads 100 and 200 may be required when the braking is released. To differently set or provide the restoring forces applied to the outer brake pad 100 and the inner brake pad 200, the carrier 300 of the brake caliper according to the first embodiment of the present invention may have asymmetric positions of the coupling hooks 310 and 320.

Specifically, referring to FIG. 5, the pair of brake pads 100 and 200 are coupled to the carrier 300 to press both side surfaces of the disk 50, wherein the outer brake pad 100 is coupled with its protruding portions 125 being received in the outer slide grooves of the carrier 300 to be movable towards and away from an outer surface of the disk 50. In addition, the inner brake pad 200 is coupled with its protruding portions 125 being received in the inner slide grooves of the carrier 300 to be movable towards and away from an inner surface of the disk 50.

Retraction springs 11 to 14 illustrated in FIG. 5 each may be implemented by the retraction spring 10 described above. The retraction springs 11 and 12 are coupled to a respective one of the protruding portions 125 formed at both sides of the outer brake pad 100. The retraction springs 13 and 14 are coupled to a respective one of the protruding portions 125 formed at both sides of the inner brake pad 200. As mentioned before, the retraction springs 11 and 12 coupled to the outer brake pad 100 and the retraction springs 13 and 14 coupled to the inner brake pad 200 may be provided as identically formed retraction springs 10.

As exemplarily shown in FIG. 5, the carrier 300 may be provided such that a distance d2 in the axial direction from the disk 50 to the coupling hook 310 onto which the outer brake pad 100 is fitted differs from a distance d1 in the axial direction from the disk 50 to the coupling hook 320 onto which the inner brake pad 200 is fitted. As described above, one side of the retraction spring 10 is coupled to the respective protruding portion 125 of the respective brake pad 100 and 200, and the other side of the retraction spring 10 is supported by the respective coupling hook 310 and 320 of the carrier 300. In this case, when the distance d1 of coupling hook 320 to the disk 50 becomes large, the deformation of the body part 1140 is relatively large when the brake pad 200 is moved into contact with the surface of the disk 50. As a result, a relatively large restoring force is applied to the brake pad 200. Conversely, when the coupling hook 320 is relatively close to the disk 50, that is, when the distance d1 becomes small, the deformation of the body part 1140 is relatively small when the brake pad 200 is moved into contact with the surface of the disk 50. Thus, a relatively small restoring force is applied to the brake pad 100.

Specifically, referring to FIG. 5, each of the elastic restoring forces applied to the outer brake pad 100 and the inner brake pad 200 is determined depending on a distance d2 from the disk 50 to the coupling hook 310 around the slide groove to which the outer brake pad 100 is coupled and a distance d1 from the disk 50 to the coupling hook 320 around the slide groove to which the inner brake pad 200 is coupled. As illustrated in FIG. 5, as the distance d1 to the coupling hook 320 around the slide groove to which the inner brake pad 200 is coupled is provided larger than the distance d2 to the coupling hook 310 around the slide groove to which the outer brake pad 100 is coupled, the body part 1140 of the retraction springs 13 and 14 provided at the inner brake pad 200 may be subject to larger deformation during the braking operation than the body parts 1140 of the retraction springs 11 and 12 provided at the outer brake pad 100. Therefore, a larger restoring force may be applied to the inner brake pad 200 than to the outer brake pad 100. Thereby, it may be possible to prevent uneven wear of the brake pads 100 and 200 and implement a more stable braking operation.

In the following, a retraction spring and a brake caliper having the same according to a second embodiment of the present invention will be described.

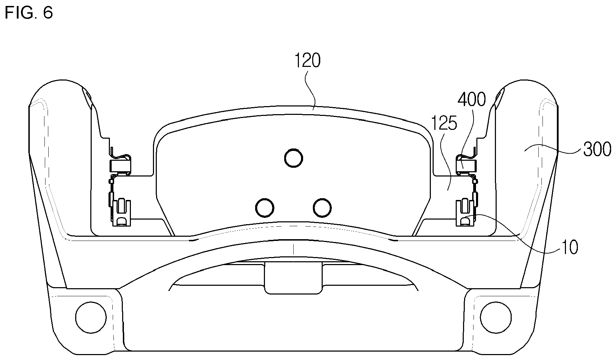

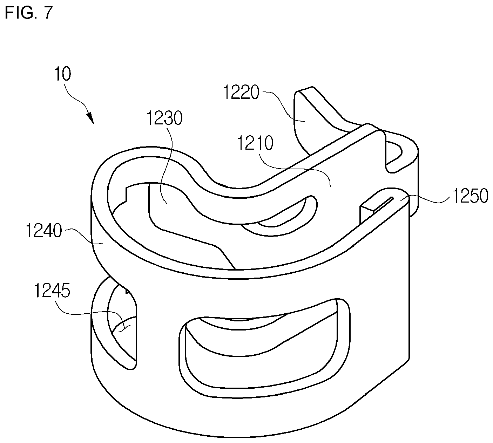

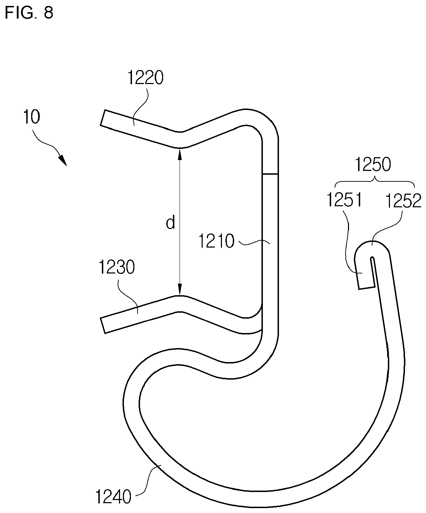

FIG. 6 is a front view schematically illustrating a brake caliper according to a second embodiment of the present invention. In addition, FIGS. 7 and 8 are a perspective view and a plan view illustrating a retraction spring according to the second embodiment of the present invention.

Referring to FIGS. 6 to 8, a retraction spring 10 according to the second embodiment of the present invention may be provided such that a connecting portion 1210 of a pad coupling part faces or contacts a lower surface of the protruding portion 125 of the brake pad 100, 200. The lower surface of the protruding portion 125 may be oriented in the radial direction and may face a radially inner surface of the slide groove.

Since the elastic spring of the second embodiment is similar to that of the first embodiment, description of structures identical to both embodiments will be omitted in the following description as far as possible to avoid repetitions.

Referring to FIGS. 6 to 8, the retraction spring 10 according to the second embodiment of the present invention may include a pad coupling part, a body part 1240, and a carrier support part 1250. The pad coupling part may comprise a connecting portion 1210, a first arm 1220, and a second arm 1230.

According to the second embodiment, generally, the first arm 1220 and the second arm 1230 each may extend transverse or substantially perpendicular to the connecting portion 1210 that connects the first and second arms 1220, 1230. The first and second arms 1220, 1230 may be arranged spaced to each other such that a receiving gap for receiving the protruding portion therein is formed between first and second arms 1220, 1230. For example, the first arm 1220 may be positioned on a first end of the connecting portion 1210, and the second arm 1130 may be positioned at a second end of the connecting portion 1210.

The first arm 1220 according to the second embodiment may be bent at or from the first side or end of the connecting portion 1210 and, when the retraction spring 10 is coupled to the brake pad 100, 200, may extend toward the protruding portion 125 or the brake pad 100, 200. At least a portion of the second arm 1230 may be cut and bent at or from the second side or end of the connecting portion 1210 and, when the retraction spring 10 is coupled to the brake pad 100, 200, may extend toward the protruding portion 125 or the brake pad 100, 200. When the retraction spring 10 is coupled to the brake pad 100, 200, the first arm 1220 and the second art 1230 may extend in a direction substantially parallel to the protruding portion 125 or the brake pad 100, 200 and/or substantially perpendicular to the connecting portion 1210 of the retraction spring 10. In addition, the body part 1240 to be described below is connected to and formed to extend from the second side or end of the connecting portion 1210.

The first arm 1220 may have a curved shape. For example, the first arm 1220 may be substantially V-shaped. In detail, the first arm 1220 may include a first inclined portion bent at or from the first side or end of the connecting portion 1210 toward the second arm 1230 and having an inclination approaching the second arm 1230, and a second inclined portion bent away from the second arm 1230 and having an inclination away from the second arm 1230. As shown in FIG. 8, also the second arm 1230 may have a curved shape that may, for example, be substantially a V-shape. In particular, the second arm 1230 may include a third inclined portion bent at or from the second side or end of the connecting portion 1210 toward the first arm 1220 and having an inclination approaching the first arm 1220 and a fourth inclined portion bent away from the first arm 1230 having an inclination away from the first arm 1220. That is, the first arm 1220 may have a shape in which a connecting portion of the first inclined portion and the second inclined portion of the first arm 1220 protrudes toward the second arm 1230, and the second arm 1230 may have a shape in which a connecting portion of the third inclined portion and the fourth inclined portion of the second arm 1230 protrudes toward the first arm 1220. Preferably, the protruded connecting portions of the first arm 1220 and the second arm 1230 may be provided opposite each other, i.e., at corresponding positions. Thereby, the protruded connecting portions of the first arm 1220 and the second arm 1230 may be securely or firmly coupled to the protruding portions 125 of the brake pad 100, 200 inserted between the first arm 1220 and the second arm 1230. In this case, a minimum distance d between the first arm 1220 and the second arm 1230 may be defined by the distance between protruded connecting portions of the first arm 1220 and the second arm 1230. Generally, the curved shape of the first arm 1220 and the curved shape of the second arm 1230 may be such that a minimum distance between the first arm 1220 and the second arm 1230 in a state, in which the retraction spring 10 is not coupled to the protruding portion 125 of the brake pad 100, 200, may be narrower or smaller than a thickness of the protruding portion 125. Thus, when the protruding portion 125 is inserted between the first arm 1220 and the second arm 1230, the first to fourth inclined portions can be elastically deformed, and, consequently, the protruding portion 125 may be stably or firmly placed or coupled between the first arm 1220 and the second arm 1230 by their elastic restoring force.

The body part 1240 may be connected to and formed to extend from the second side or end of the connecting portion 1210. In the second embodiment, the body part 1240 may be bent to have a substantially continuously curved shape, of which one end is connected to and extends from the pad coupling part and the other end is connected and extends to the carrier support part 1250. Specifically, the body part 1240 may be primarily bent upward or in a direction corresponding to the upward direction from the pad coupling part, secondarily bent downward or in a direction corresponding to the downward direction, and tertiarily bent in an axial direction or a direction corresponding to the axial direction to be connected and extend to the carrier support part 1250. In other words, the body part 1240 may comprise a first section connected to the second end of the connecting portion 1210 of the pad coupling part and extending in an arc shape from the connecting portion 1210 on a first lateral side of the connecting portion 1210 on which the first and second arms 1220, 1230 extend, a second section connected to the first section and extending in an arc shape of opposite curvature than the first section from the first lateral side of the connecting portion 1210 to a second lateral side of the connecting portion 1210, and a third portion that is connected to the second portion and extends linear or substantially linear from the second portion towards the pad coupling part.

In addition, the body part 1240 may have one or more openings 1245 formed to pass therethrough. The opening 1245 may be formed to pass through the bent band-shaped body part 1240, and a magnitude or strength of the elastic restoring force which can be generated by the body part 1240 may be adjusted by varying the number and sizes of the openings 1245. Optionally, a plurality of openings 1245 may be provided, and the plurality of openings 1245 may be disposed to be spaced a certain distance apart or from each other along the body part 1240.

The carrier support part 1250 may include a bent portion 1252 connected to an end of the body part 1240 and an extension 1251. As exemplarily shown in FIGS. 7 and 8, the extension 1251 is positioned overlapping with an end portion of the body part 1250 and is connected to the end of the body part 1240 by the bent portion. In other words, the bent portion 1252 and the extension 1251 may be formed in a substantially "U"-shaped cross-sectional shape so that an outer end portion of the bent portion 1252 may be in contact with and supported by the carrier 300.

Hereinafter, a retraction spring according to a third embodiment of the present invention will be described.

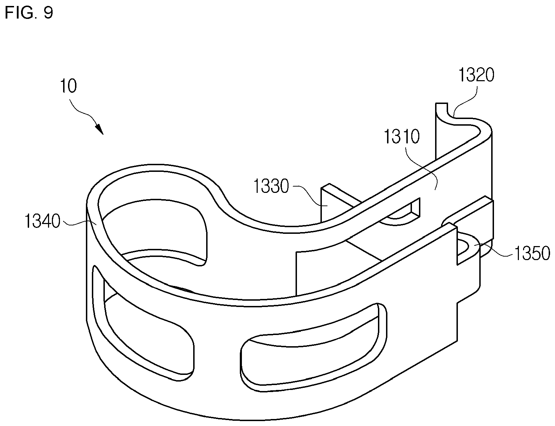

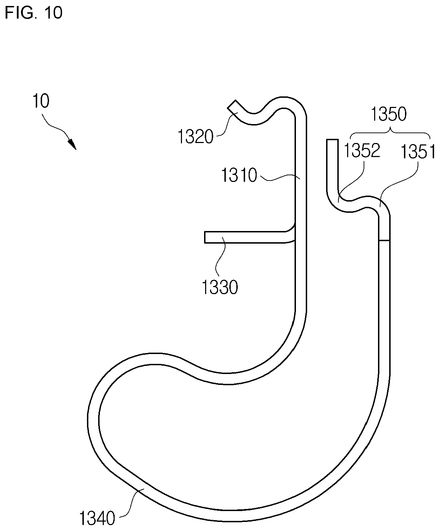

FIGS. 9 and 10 are a perspective view and a plan view illustrating a retraction spring according to the third embodiment of the present invention.

Referring to FIGS. 9 and 10, the retraction spring 10 according to the third embodiment may include a pad coupling part, a body part 1340, and a carrier support part 1350. The pad coupling part may include a connecting portion 1310, a first arm 1320, and a second arm 1330.

The following description of the third embodiment of the present invention other than an additional description is the same as or similar to the above description of the first and second embodiments of the present invention and thus will be omitted to prevent overlapping contents. The retraction spring 10 according to the third embodiment differs from the retraction spring 10 according to the first embodiment only by the configuration of the carrier support part 1350.

Referring to FIGS. 9 and 10, the carrier support part 1350 according to the third embodiment may include a first bent portion 1351 extending from an end of the body part 1340 and bent toward the pad coupling part and a second bent portion 1352 extending from the first bent portion 1351 and bent in a direction substantially opposite to, or different from, the first bent portion 1351. In other words, the first bent portion 1351 and the second bent portion 1352 may be bent in substantially opposite or different directions to form a zigzag shape or S-shape. A substantially stepped shape or portion may be formed by the first bent portion 1351 and the second bent portion 1352 forming the zigzag shape, and the coupling hook 310 of the carrier 300 may be supported by being contacted with the stepped portion of the carrier support part 1350.

A width of the carrier support part 1350 may be narrower or smaller than a width of the body part 1340. Therefore, even when a space in the coupling hook 310 of the carrier 300 is small or narrow, the carrier support part 1350 of the retraction spring 10 may be easily coupled to or contacted with and seated on the coupling hook 310 to stably support the retraction spring 10.

Hereinafter, a retraction spring according to a fourth embodiment of the present invention will be described.

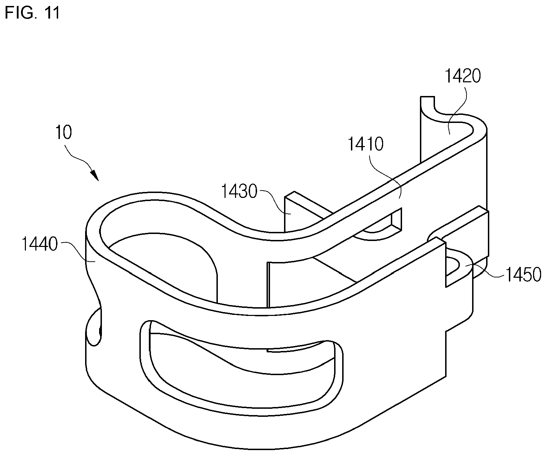

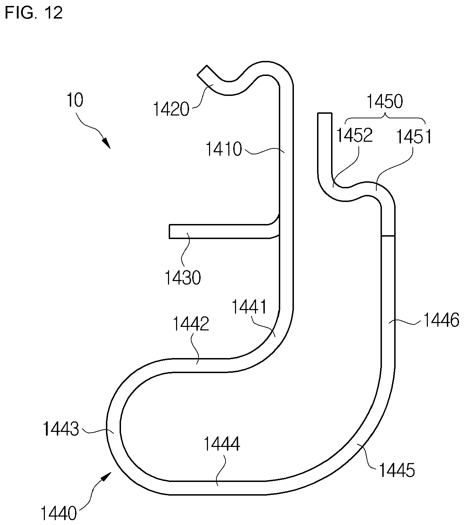

FIGS. 11 and 12 are a perspective view and a plan view illustrating a retraction spring according to the fourth embodiment of the present invention.

Referring to FIGS. 11 and 12, the retraction spring 10 according to the fourth embodiment includes a pad coupling part, a body part 1440, and a carrier support part 1450. The pad coupling part may include a connecting portion 1410, a first arm 1420, and a second arm 1430.

The following description of the fourth embodiment of the present invention other than an additional description is the same as or similar to the above description of the first to third embodiments of the present invention and thus will be omitted to prevent overlapping contents. The retraction spring 10 according to the fourth embodiment differs from the retraction spring 10 according to the third embodiment only by the configuration of the body part 1440.

Referring to FIGS. 11 and 12, the body part 1440 according to the fourth embodiment may be bent to have a plurality of flat portions or linear portions from the pad coupling part to the carrier support part 1450 and one or more curved portions connecting the plurality of flat portions.

The body part 1440 may include a first curved portion 1441, a first flat portion 1442, a second curved portion 1443, a second flat portion 1444, a third curved portion 1445, and a third flat portion 1446.

In one example in which the connecting portion 1410 is disposed to face or contact a side surface of the protruding portion 125 of the brake pad 100, 200, the first curved portion 1441 is from the pad coupling part bent towards the lateral side of the connecting portion on which the first and second arms 1420, 1430 extend (e.g. towards a center of the brake pad 100). The first flat portion 1442 extends linearly from the first curved portion 1441. The second curved portion 1443 is bent in an opposite direction than the first curved portion 1441 (e.g. in a direction of being away from the center of the brake pad 100) from the first flat portion 1442. The second flat portion 1444 extends linearly from the second curved portion 1443. The third curved portion 1445 is bent axially or towards the pad coupling part (e.g. in a direction perpendicular to the brake pad 100) from the second flat portion 1444 and, when being coupled to the carrier 300, faces the carrier 300. The third flat portion 1446 extends linearly from the third curved portion 1445 to the carrier support part 1450.

When the retraction spring 10 is coupled to the brake pad 100, 200 such that the connecting portion 1410 is disposed to face or contact a lower surface of the protruding portion 125 of the brake pad 100, 200, the first curved portion 1441 may be bent upward from the pad coupling part, the first flat portion 1442 extends from the first curved portion 1441, the second curved portion 1443 is bent downward from the first flat portion 1442, the second flat portion 1444 extends from the second curved portion 1443, the third curved portion 1445 is bent axially from the second flat portion 1444 and faces the carrier 300, and the third flat portion 1446 extends from the third curved portion 1445 to the carrier support part 1450.

Hereinafter, a retraction spring according to a fifth embodiment of the present invention will be described.

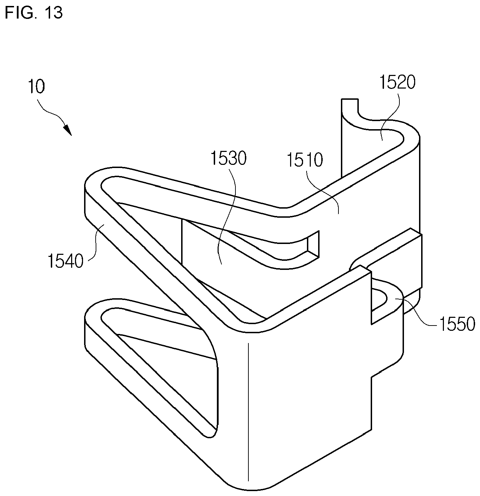

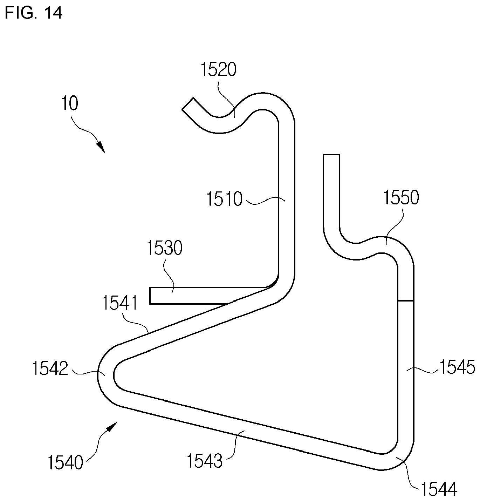

FIGS. 13 and 14 are a perspective view and a plan view illustrating a retraction spring according to the fifth embodiment of the present invention.

Referring to FIGS. 13 and 14, a retraction spring 10 according to the fifth embodiment may include a pad coupling part, a body part 1540, and a carrier support part 1550. The pad coupling part may include a connecting portion 1510, a first arm 1520, and a second arm 1530.

The following description of the fifth embodiment of the present invention other than an additional description is the same as or similar to the above description of the first to fourth embodiments of the present invention and thus will be omitted to prevent overlapping contents. The retraction spring 10 according to the fifth embodiment differs from the retraction spring 10 according to the third embodiment only by the configuration of the body part 1540.

Referring to FIGS. 13 and 14, the body part 1540 according to the fifth embodiment may be bent to have a plurality of flat portions from the pad coupling part to the carrier support part 1550 and one or more curved portions connecting the plurality of flat portions.

The body part 1540 may include a first flat portion 1541, a first curved portion 1542, a second flat portion 1543, a second curved portion 1544, and a third flat portion 1545.

For example, as visible best from FIG. 14, the first flat portion 1541 may extend linearly from the second end of the connecting portion 1510, wherein the first flat portion 1541 is bent to a first lateral side of the connecting portion 1510 on which the first and second 1520, 1530 arms extend. In particular, the first flat portion 1541 may extend inclined, i.e., non-perpendicular, relative to the connecting portion 1510. The first curved portion 1542 is connected to the first flat portion 1541 and extends in an arc shape. The second flat portion 1543 is connected to the first curved portion 1542 and extends linearly from the first lateral side of the connecting portion 1510 to a second lateral side of the connecting portion 1510. As exemplarily shown in FIG. 14, the first and the second flat portion 1543 may enclose an acute angle. The second curved portion 1544 is connected to the second flat portion 1543 and extends in an arc shape. The second curved portion 1544 is bent towards the connecting portion 1510. The third flat portion 1545 extends linearly from the second curved portion 1544 towards the connecting portion 1510.

When the retraction spring 10 is coupled to the brake pad 10 such that the connecting portion 1510 is disposed to face or contact the side surface of the protruding portion 125 of the brake pad 100, 200, the first flat portion 1541 extends toward a portion corresponding to a center (e.g. a center of the brake pad 100 with respect to the circumferential direction) from the pad coupling part, the first curved portion 1542 is bent in a direction corresponding to the outward direction (e.g. in a direction of being away from the center of the brake pad 100) from the first flat portion 1541, the second flat portion 1543 extends from the first curved portion 1542, the second curved portion 1544 is bent axially (e.g. in a direction perpendicular to the brake pad 100) from the second flat portion 1543 and faces the carrier 300, and the third flat portion 1545 extends from the second curved portion 1544 along the axial direction to the carrier support part 1550, and, thus, a cross-sectional shape of the body part 1540 may be a triangle with rounded corners.

When the retraction spring 10 is coupled to the brake pad 10 such that the connecting portion 1510 is disposed to face or contact the lower surface of the protruding portion 125 of the brake pad 100, 200, the first flat portion 1541 is bent and extends upwards with respect to the radial direction from the pad coupling part, the first curved portion 1542 is bent downwards with respect to the radial direction from the first flat portion 1541, the second flat portion 1543 extends from the first curved portion 1542, the second curved portion 1544 is bent axially from the second flat portion 1543 and faces the carrier 300, and the third flat portion 1545 extends from the second curved portion 1544 along the axial direction to the carrier support part 1550.

Hereinafter, a retraction spring according to a sixth embodiment of the present invention will be described.

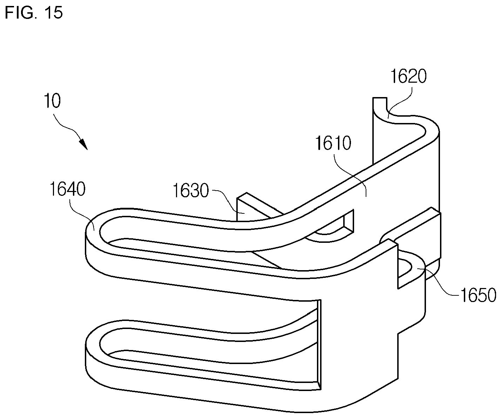

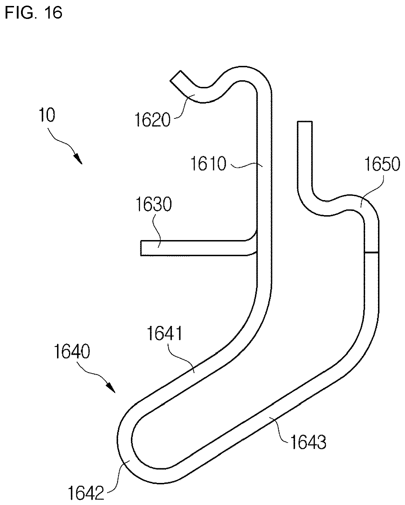

FIGS. 15 and 16 are a perspective view and a plan view illustrating a retraction spring according to the sixth embodiment of the present invention.

Referring to FIGS. 15 and 16, the retraction spring 10 according to the sixth embodiment includes a pad coupling part, a body part 1640, and a carrier support part 1650. The pad coupling part may include a connecting portion 1610, a first arm 1620, and a second arm 1630.

The following description of the sixth embodiment of the present invention other than an additional description is the same as or similar to the above description of the first to fifth embodiments of the present invention and thus will be omitted to prevent overlapping contents. The retraction spring 10 according to the sixth embodiment differs from the retraction spring 10 according to the third embodiment only by the configuration of the body part 1640.

Referring to FIGS. 15 and 16, the body part 1640 according to the sixth embodiment may be bent to have a plurality of flat portions from the pad coupling part to the carrier support part 1650 and one or more curved portions connecting the plurality of flat portions.

The body part 1640 may include a first flat portion 1641, a first curved portion 1642, and a second flat portion 1643.

For example, as visible best from FIG. 16, the first flat portion 1641 may extend linearly from the second end of the connecting portion 1610, wherein the first flat portion 1561 is bent to a first lateral side of the connecting portion 1510 on which the first and second 1620, 1630 arms extend. In particular, the first flat portion 1641 may extend inclined, i.e., non-perpendicular, relative to the connecting portion 1610. The first curved portion 1642 is connected to the first flat portion 1641 and extends in an arc shape. The second flat portion 1643 is connected to the first curved portion 1642 and extends linearly from the first lateral side of the connecting portion 1610 to a second lateral side of the connecting portion 1610. As exemplarily shown in FIG. 16, the first and the second flat portion 1641, 1643 may extend parallel or substantially parallel. As further exemplarily shown in FIG. 16, an end of the second flat portion 1643 may be connected to the 1650 carrier support part 1650 through a further curved portion.

When the retraction spring 10 is coupled to the brake pad 10 such that the connecting portion 1610 is disposed to face or contact the side surface of the protruding portion 125 of the brake pad 100, the first flat portion 1641 is bent and extends to a portion corresponding to a center (e.g. a center of the brake pad 100 with respect to the circumferential direction) from the pad coupling part, the first curved portion 1642 is bent outwards with respect to the circumferential direction (e.g. in a direction of being away from the center of the brake pad 100) from the first flat portion 1641, and the second flat portion 1643 extends from the first curved portion 1642 and the carrier support part 1650 is bent axially (e.g. in a direction substantially perpendicular to the brake pad 100) from the second flat portion 1643 to face the carrier 300. As illustrated in FIG. 16, the first flat portion 1641 and the second flat portion 1643 may be disposed substantially parallel to each other in a cross section of the body part 1640.

When the retraction spring 10 is coupled to the brake pad 10 such that the connecting portion 1610 is disposed to face or contact the lower surface of the protruding portion 125 of the brake pad 100, the first flat portion 1641 is bent and extends in upwards with respect to the radial direction from the pad coupling part, the first curved portion 1642 is bent downwards with respect to the radial direction from the first flat portion 1641, and the second flat portion 1643 extends from the first curved portion 1642 and the carrier support part 1650 is bent axially from the second flat portion 1643 to face the carrier 300. As illustrated in FIG. 16, the first flat portion 1641 and the second flat portion 1643 may be disposed substantially parallel to each other in the cross section of the body part 1640.

As is apparent from the above description, the retraction spring can be provided in a separated manner, and therefore it is possible to easily perform a change or adjustment in structure of the retraction spring.

Further, the retraction spring helps to improve braking performance of the brake caliper with an excellent restoring force.

Due to the configuration of the retraction spring with the pad coupling part, the body part and the carrier support part being integrally formed, it is possible to minimize material waste during the manufacturing of the retraction spring and reduce the manufacture cost of the retraction spring.

Moreover, the retraction spring can easily be assembled to a brake caliper, and maintenance of the retraction spring is eased.

Finally, the retraction spring improves operational performance and product reliability of the brake caliper.

Although specific embodiments have been described above, the invention is not limited to those embodiments. In particular, it may also be possible to combine the pad coupling part, the body part and the carrier support part of the first to sixth embodiments freely. For example, the carrier support part of the first embodiment may also be employed in the retraction springs of the second to sixth embodiments. Likewise, the body parts of the fourth to sixth embodiments may also be combined with the pad coupling parts and/or the carrier support part of the first or second embodiment.

## Claims

1. A retraction spring (10) for retracting a brake pad (100, 200) from a brake disk (50) in a brake caliper, the retraction spring (10) comprising:
a pad coupling part to be coupled to a protruded portion (125) of the brake pad (100, 200), the pad coupling part including a first arm (1120, 1220, 1320, 1420, 1520, 1620), a second arm (1130, 1230, 1330, 1430, 1530, 1630), and a connecting portion (1110, 1210, 1310, 1410, 1510, 1610) connecting the first arm (1120, 1220, 1320, 1420, 1520, 1620) and the second arm (1130, 1230, 1330, 1430, 1530, 1630), wherein the first arm (1120, 1220, 1320, 1420, 1520, 1620) is bent from a first end of the connecting portion (1110, 1210, 1310, 1410, 1510, 1610) and extends transverse to the connecting portion (1110, 1210, 1310, 1410, 1510, 1610), and the second arm (1130, 1230, 1330, 1430, 1530, 1630) is bent from an opposite second end of the connecting portion (1110, 1210, 1310, 1410, 1510, 1610) and extends transverse to the connecting portion (1110, 1210, 1310, 1410, 1510, 1610), so that a gap is formed between the first arm (1120, 1220, 1320, 1420, 1520, 1620) and the second arm (1130, 1230, 1330, 1430, 1530, 1630) for receiving the protruded portion (125) of the brake pad (100, 200);
a body part (1140, 1240, 1340, 1440, 1540, 1640) configured to provide an elastic restoring force, wherein the body (1140, 1240, 1340, 1440, 1540, 1640) extends from and is bent relative to the second end of the connecting portion (1110, 1210, 1310, 1410, 1510, 1610); and
a carrier support part (1150, 1250, 1350, 1450, 1550, 1650) extending from the body part (1140, 1240, 1340, 1440, 1540, 1640) and provided to be supported by a coupling hook (310) formed on a carrier (300) to which the brake pad is movably mounted.

2. The retraction spring (10) of claim 1, wherein the body part (1140, 1240, 1340, 1440, 1540, 1640) comprises a first bent portion bent from the pad coupling part to a first side of the connecting portion (1110, 1210, 1310, 1410, 1510, 1610) on which the first and second arms (1120, 1220, 1320, 1420, 1520, 1620; 1130, 1230, 1330, 1430, 1530, 1630) extend, and a second bent portion bent in a direction of a second side of the connecting portion (1110, 1210, 1310, 1410, 1510, 1610) opposite to the first side.

3. The retraction spring (10) of claim 2, wherein the body part (1140, 1240, 1340, 1440, 1540, 1640) further comprises a third bent portion bent in a direction substantially parallel to the connecting portion(1110, 1210, 1310, 1410, 1510, 1610).

4. The retraction spring (10) of any one of the preceding claims, wherein the first arm (1120, 1220, 1320, 1420, 1520, 1620) of the pad coupling part includes a first inclined portion bent from the first end of the connecting portion (1110, 1210, 1310, 1410, 1510, 1610) and inclined toward the second arm (1130, 1230, 1330, 1430, 1530, 1630) of the pad coupling part, and a second inclined portion bent from the first inclined portion and inclined away from the second arm (1130, 1230, 1330, 1430, 1530, 1630) of the pad coupling part.

5. The retraction spring (10) of any one of the preceding claims, wherein the second arm (1230) of the pad coupling part includes a third inclined portion bent from the second end of the connecting portion (1210) and inclined toward the first arm (1220) of the pad coupling part, and a fourth inclined portion bent from the third inclined portion and inclined away from the first arm (1220) of the pad coupling part.

6. The retraction spring (10) of any one of the preceding claims, wherein the body part (1140, 1240, 1340, 1440, 1540, 1640) has at least one opening (1145, 1245).

7. The retraction spring (10) of any one of the preceding claims, wherein the carrier support part (1350, 1450) includes:
a first bent portion (1351, 1451) extending from the body part (1340, 1440) and bent in a first direction; and
a second bent portion (1352, 1452) extending from the first bent portion (1351, 1451) and bent in another direction different from the first direction in which the first leg is bent.

8. The retraction spring (10) of claim 7, wherein the first bent portion (1351 , 1451) is bent towards the connecting portion (1310, 1410) of the pad coupling part.

9. The retraction spring (10) of any one of claims 1 to 7, wherein the carrier support part (1150) includes
a first leg (1151) extending from the body part (1140) and having a shape of being at least partially cut and bent in a first direction; and
a second leg (1152) extending from the body part (1140) and bent in a direction different from the first direction in which the first leg is bent.

10. The retraction spring (10) of claim 9, wherein the first leg (1151) is bent in a direction away from the connecting portion (1110) of the pad coupling part, and the second leg (1152) is bent towards the connecting portion (1110) of the pad coupling part.

11. The retraction spring (10) of any one of claims 1 to 7, wherein the carrier support part (1250) includes at least one bent portion (1252) extending and bent from the body part (1240).

12. The retraction spring (10) of claim 11, wherein the carrier support part (1250) further includes an extension positioned overlapping to an end portion of the body part (1240) and being connected to the end portion of the body part (1240) by the bent portion (1252).

13. A brake caliper comprising:
a carrier (300) including slide grooves extending in an axial direction and coupling hooks (310, 320) formed neighboring to the slide grooves;
a pair of brake pads (100, 200) for contacting a brake disk (50), each brake pad (100, 200) comprising a protruded portion (125) protruding laterally from the respective brake pads (100, 200), wherein the protruded portions (125) of the brake pads (100, 200) are guided in the slide grooves to be movable along the axial direction; and
a retraction spring (10) according to any one of the preceding claims coupled to one of the protruded portions (125) of the brake pads (100, 200) and configured to apply a restoring force to the respective brake pad (100, 200)when it is moved in the axial direction,
wherein a respective one of the protruded portions (125) of the brake pads (100, 200) is positioned in the gap between the first arm (1120, 1220, 1320, 1420, 1520, 1620) and the second arm (1130, 1230, 1330, 1430, 1530, 1630) of the pad coupling part of the retraction spring (10) such that a front surface of the respective protruded portion (125) is supported by the first arm (1120, 1220, 1320, 1420, 1520, 1620), a rear surface of the respective protruded portion (125) is supported by the second arm (1130, 1230, 1330, 1430, 1530, 1630), and the connecting portion (1110, 1210, 1310, 1410, 1510, 1610) is disposed to face a side surface or a lower surface of the respective protruded portion (125), wherein the front and rear surface are oriented opposite to each other in the axial direction, the lower surface is oriented in a radial direction extending transverse to the axial direction, and the side surface is oriented in a circumferential direction extending transverse to the axial direction and the radial direction, and
wherein the carrier support part (1150, 1250, 1350, 1450, 1550, 1650) is supported by one of the coupling hooks (310, 320).

14. A brake for a vehicle, comprising:
a brake disk (50) rotatable about a rotational axis which extends parallel to the axial direction; and
the brake caliper of claim 13;
wherein the brake pads (100, 200) are positioned on opposite sides of the brake disk (50) to be movable into contact with opposite side surfaces of the brake disk (50).

15. The brake of claim 14, wherein the carrier (300) is positioned in the axial direction relative to the brake disk (50) such that a distance (d2) from the brake disk (50) to the coupling hooks (310) on which the retraction springs (11, 12) coupled to the protruded portions (125) of one of the pair of brake pads (100) are supported is different from a distance (d2) from the brake disk (50) to the coupling hooks (320) on which the retraction springs (13, 14) coupled to the protruded portions of the other one of the pair of brake pads (200) are disposed.
